# EUROPEAN PATENT SPECIFICATION

(11) **EP 2 791 555 B1**
(45) Date of publication and mention of the grant of the patent: **20.02.2019**
(21) Application number: 12857969.5
(22) Date of filing: 10.12.2012
(51) Int. Cl.: F16H 61/16, B60W 10/06, B60W 10/11, B60W 30/19, F16H 61/18, F16H 61/12, F16H 61/04, F16H 63/50

(54) **DEVICE AND METHOD FOR CHANGING GEARS IN A POWERTRAIN OF A MOTOR VEHICLE**
VORRICHTUNG UND VERFAHREN ZUM SCHALTEN EINER ANTRIEBSEINHEIT EINES FAHRZEUGS
DISPOSITIF ET PROCÉDÉ DE CHANGEMENT DE VITESSES DANS LE GROUPE MOTOPROPULSEUR D'UN VÉHICULE À MOTEUR

(30) Priority: 13.12.2011 SE 1151183
(43) Date of publication of application: 22.10.2014
(73) Proprietor: Scania CV AB, 151 87 Södertälje (SE)
(72) Inventor: CARLSSON, Ulf, 144 63 Rönninge (SE); RUNDQVIST, Erik, 117 37 Stockholm (SE)
(74) Representative: Scania CV AB
(86) International application number: PCT/SE2012/051362
(87) International publication number: WO 2013/089619

(56) References cited:
- EP-A1- 0 670 440
- EP-A1- 0 677 684
- EP-A2- 0 314 409
- EP-A2- 0 578 398
- US-A1- 2004 092 364
- US-A1- 2010 042 299
- US-A1- 2011 172 888
- US-A1- 2011 224 855

## Description

### TECHNICAL FIELD

The present invention relates to a method for changing gear in a power train of a motor vehicle provided with an engine, clutch device and gearbox without synchronising rings. The invention relates also to a computer programme product comprising programme code for a computer for implementing a method according to the invention. It relates also to a device for changing gear in a power train of a motor vehicle provided with an engine, clutch device and gearbox without synchronising rings, and a motor vehicle equipped with the device.

### BACKGROUND

In today's vehicles which have a gearbox with automatic clutch, said clutch is often only used in certain operating situations, e.g. marshalling. When changing gear during ordinary operation the vehicle's engine may instead be controlled in such a way that zero torque is reached in the gearbox, whereupon a prevailing gear is disengaged, the engine is directed to an appropriate speed and another gear can be engaged. More recent generations of gearboxes have no synchronising rings. Synchronising rings are arranged to adapt the respective speeds of gearwheels which come into mutual engagement for a specified gear step during the engagement of a chosen gear in the gearbox.

In cases where the vehicle's engine cannot deliver torque demanded, e.g. when fuel in a fuel tank of the vehicle has come to an end, the engine will stop rather immediately when a prevailing gear is disengaged during a gearchange procedure. It thus becomes very difficult or impossible to engage another gear in the gearbox, since there are no synchronising rings.

When the engine is dragging, e.g. when travelling on a downhill run, it is impossible to judge whether it can deliver desired torque during a coming gear change. If in such a case the engine stops while the vehicle is in motion, a so-called steering servo will also cease to function as intended, potentially leading to dangerous traffic situations. This is particularly hazardous when negotiating a bend downhill.

EP 0677684 describes an adaptive control system for at least partly automated transmission systems for determining whether chosen upshifts to a gear step are appropriate or not in a prevailing operating situation, and for preventing the initiation of inappropriate upshifts.

### SUMMARY OF THE INVENTION

An object of the present invention is to propose a novel and advantageous method pertaining to changing gear in a power train of a motor vehicle.

Another object of the invention is to propose a novel and advantageous device and a novel and advantageous computer programme pertaining to changing gear in a power train of a motor vehicle.

A further object of the invention is to propose a method, a device and a computer programme for achieving a robust gearchange procedure in a motor vehicle.

A further object of the invention is to propose a method, a device and a computer programme for achieving a safe gearchange strategy in a motor vehicle.

A further object of the invention is to propose an alternative method, an alternative device and an alternative computer programme for achieving a robust gearchange procedure in a motor vehicle.

A further object of the invention is to propose an alternative method, an alternative device and an alternative computer programme for achieving a robust gearchange procedure in a motor vehicle during dragging of the vehicle's engine.

A further object of the invention is to propose an alternative method, an alternative device and an alternative computer programme for effecting gear changes in a power train of a motor vehicle provided with an engine, clutch device and gearbox without synchronising rings.

These objects are achieved with a method pertaining to changing gear in a power train of a motor vehicle provided with an engine, clutch device and gearbox without synchronising rings according to claim 1.

One aspect of the invention proposes a method pertaining to changing gear in a power train of a motor vehicle provided with an engine, a clutch device and a gearbox without synchronising rings, comprising the steps of
- demanding gear ratio change in said gearbox,
- interrupting torque transmission between said engine and said gearbox by means of said clutch device,
- choosing an engine speed set-point value,
- determining whether said engine responds to a demand for said engine to be directed towards said speed set-point value, and
- changing gear ratio if said engine responds to said demand.

The method may further comprise the steps of
- refraining from changing gear ratio if said engine does not respond to said demand,
- activating torque transmission between said engine and said gearbox by means of said clutch, resulting in a robust method in that a gear change which cannot be effected is not initiated. The result is a safe method, according to one aspect of the invention, since stalling of the vehicle's engine is prevented. This means that a steering servo of the vehicle will not cease to function, which is of course advantageous from many perspectives.

The method may further comprise the step of
- indicating that said engine does not respond to said demand, in which case gear ratio change is inappropriate. A driver may thus reliably and quickly be informed of whether or not a desired gear change can take place, which in certain situations may imply that fuel in a fuel tank of the vehicle has come to an end.

The method may further comprise the step of
- changing an operating mode for control of the vehicle if the engine does not respond to said demand. This means that an optimum way of running the vehicle in prevailing circumstances can be activated. Said operating mode may be a so-called limp-home mode whereby the vehicle can travel with a desired reduction of its engine's torque.

The method may further comprise the steps of
- determining said engine's speed required for changing gear,
- directing said engine to said required speed.

This has the effect that a normal gear change can be effected without help from synchronising rings in the gearbox, thereby reducing the risk of unacceptable wear in or damage to the gearbox. Only after said engine has reached the required speed will a gear step change in the gearbox be completed.

The step of gear ratio change may comprise the step of
- activating torque transmission between said engine and said gearbox by means of said clutch device.

The method may further comprise the step of
- determining whether dragging of said engine prevails. Dragging is a particularly relevant operating situation for employing the innovative method herein described. It should be noted that the method herein described may also be applied in operating situations where dragging does not prevail. The result is a versatile method according to one aspect of the invention.

The method is easy to implement in existing motor vehicles. Software pertaining to changing gear in a power train of a motor vehicle provided with an engine, clutch device and gearbox without synchronising rings according to the invention may be installed in a control unit of the vehicle during the manufacture of the vehicle. A purchaser of the vehicle may thus have the possibility of selecting the function of the method as an option. Alternatively, software comprising programme code for applying the innovative method pertaining to changing gear in a power train of a motor vehicle provided with an engine, clutch device and gearbox without synchronising rings may be installed in a control unit of the vehicle on the occasion of upgrading at a service station, in which case the software may be loaded into a memory in the control unit. Implementing the innovative method is therefore cost-effective, particularly since no further components need be installed in the vehicle, according to one aspect of the invention. Relevant hardware is currently already provided on board the vehicle. The invention therefore represents a cost-effective solution to the problems indicated above.

Software which comprises programme code pertaining to changing gear in a power train of a motor vehicle provided with an engine, clutch device and gearbox without synchronising rings is easy to update or replace. Moreover, different parts of the software comprising programme code pertaining to changing gear in a power train of a motor vehicle provided with an engine, clutch device and gearbox without synchronising rings may be replaced independently of one another. This modular configuration is advantageous from a maintenance perspective.

One aspect of the invention proposes a device for changing gear in a power train of a motor vehicle provided with an engine, a clutch device and a gearbox without synchronising rings, comprising
- means for demanding gear ratio change in said gearbox,
- means for interrupting torque transmission between said engine and said gearbox by means of said clutch device,
- means for choosing an engine speed set-point value,
- means for determining whether said engine response to a demand for said engine to be directed towards said speed set-point value, and
- means for changing gear ratio if said engine responds to said demand.

The device may further comprise
- means for refraining from changing gear ratio if said engine does not respond to said demand,
- means for activating torque transmission between said engine and said gearbox by means of said clutch.

The device may further comprise
- means for indicating that said engine does not respond to said demand, in which case gear ratio change is inappropriate.

The device may further comprise
- means for changing an operating mode for control of the vehicle if the engine does not respond to said demand.

The device may further comprise
- means for determining said engine's speed required for changing gear,
- means for directing said engine to said required speed.

The device may further comprise
- means for activating torque transmission between said engine and said gearbox by means of said clutch device.

The device may further comprise
- means for determining whether dragging of said engine prevails.

The above objects are also achieved with a motor vehicle which comprises the features of the device for changing gear in a power train of a motor vehicle provided with an engine, clutch device and gearbox without synchronising rings. The vehicle may be a truck, bus or car.

One aspect of the invention is a proposed computer programme for changing gear in a power train of a motor vehicle provided with an engine, clutch device and gearbox without synchronising rings, which programme comprises programme code stored on a computer-readable medium for causing an electronic control unit or another computer connected to the electronic control unit to perform steps according to any one of claims 1-4.

One aspect of the invention is a proposed computer programme for changing gear in a power train of a motor vehicle provided with an engine, clutch device and gearbox without synchronising rings, which programme comprises programme code for causing an electronic control unit or another computer connected to the electronic control unit to perform steps according to any one of claims 1-4.

One aspect of the invention is a proposed computer programme product comprising a programme code stored on a computer-readable medium for performing method steps according to any one of claims 1-4 when said computer programme is run on an electronic control unit or another computer connected to the electronic control unit.

Further objects, advantages and novel features of the present invention will become apparent to one skilled in the art from the details set out below, and also by putting the invention into practice. Whereas the invention is described below, it should be noted that it is not confined to the specific details described. One skilled in the art having access to the teachings herein will recognise further applications, modifications and incorporations within other fields, which are within the scope of the invention.

### BRIEF DESCRIPTION OF THE DRAWINGS

For fuller understanding of the present invention and its further objects and advantages, the detailed description set out below should be read in conjunction with the accompanying drawings, in which the same reference notations pertain to similar items in the various diagrams and
Figure 1 schematically illustrates a vehicle according to an embodiment of the invention,
Figure 2 schematically illustrates a subsystem for the vehicle depicted in Figure 1, according to an embodiment of the invention,
Figure 3a is a schematic flowchart of a method according to an embodiment of the invention,
Figure 3b is a more detailed schematic flowchart of a method according to an embodiment of the invention, and
Figure 4 schematically illustrates a computer according to an embodiment of the invention.

### DETAILED DESCRIPTION OF THE DRAWINGS

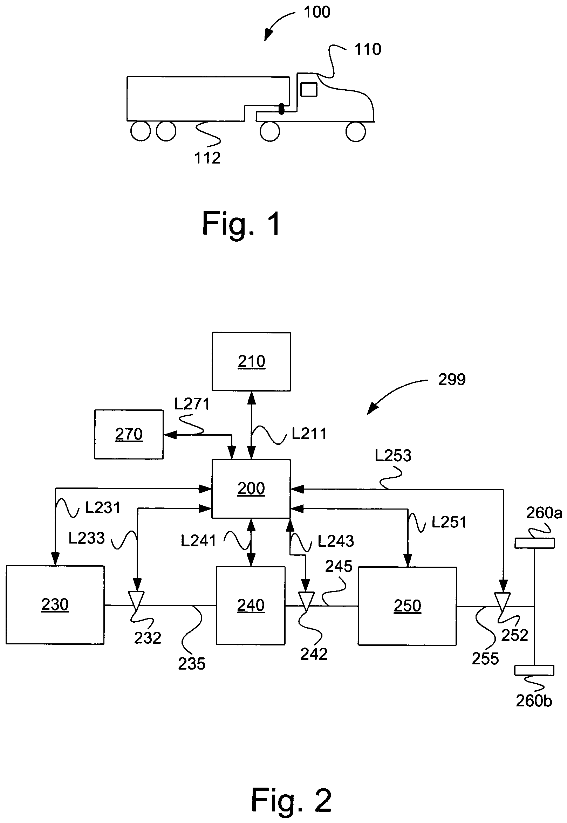

Figure 1 depicts a side view of a vehicle 100. The vehicle here exemplified comprises a tractor unit 110 and a trailer 112. The vehicle may be a heavy vehicle, e.g. a truck or a bus. It may alternatively be a car.

The term "link" refers herein to a communication link which may be a physical connection such as an opto-electronic communication line, or a non-physical connection such as a wireless connection, e.g. a radio link or microwave link.

Figure 2 depicts a subsystem 299 of the vehicle 100. This subsystem is situated in the tractor unit 110 and consists of a combustion engine 230 with an output shaft 235 which is connected to an automatic clutch 240. This clutch is also connected to a shaft 245 which is an input shaft to an automatic gearbox 250. The gearbox has an output shaft 255 to transmit torque to at least one pair of tractive wheels comprising a first tractive wheel 260a and a second tractive wheel 260b.

The engine 230 is arranged to generate torque which can be transmitted to said tractive wheels 260a and 260b to propel the vehicle. Said torque may be transmitted via a power train of the vehicle which thus comprises said shaft 235, the clutch 240, the shaft 245, the gearbox 250 and the shaft 255.

Said clutch 240 is arranged as appropriate to selectively break and activate torque transmission to the gearbox 250 and may comprise an automatically operated two-disc clutch.

The gearbox 250 is an automated gearbox with no synchronising rings and may be configured to comprise any suitable number of gear steps, e.g. 16.

A first control unit 200 is arranged for communication with said engine 230 via a link L231 and is adapted to controlling the operation of said engine in accordance with stored control routines.

The first control unit 200 is arranged for communication with said clutch 240 via a link L241 and is adapted to controlling the operation of said clutch in accordance with stored control routines.

The first control unit 200 is arranged for communication with said gearbox 250 via a link L251 and is adapted to controlling the operation of said gearbox in accordance with stored control routines. In this example the gearbox is configured without synchronising rings.

Said shaft 235 is provided with a first speed sensor 232 to continuously determine a prevailing first speed rpm1 of said shaft. This first speed sensor is adapted to continuously sending to the first control unit 200 via a link L233 a signal S1 which contains information about said prevailing speed determined rpm1 of said shaft 235.

The shaft 245 is provided with a second speed sensor 242 to continuously determine a prevailing second speed rpm2 of said shaft. This second speed sensor is adapted to continuously sending to the first control unit 200 via a link L243 a signal S2 which contains information about said prevailing speed determined rpm2 of said shaft 245.

The shaft 255 is provided with a third speed sensor 252 to continuously determine a prevailing third speed rpm3 of said shaft. This third speed sensor is adapted to continuously sending to the first control unit 200 via a link L253 a signal S3 which contains information about said prevailing speed determined rpm3 of said shaft 255.

The first control unit 200 is adapted to continuously receiving signals S1, S2 and S3 and temporarily storing in a memory in it said information about the prevailing speeds determined rpm1, rpm2 and rpm3.

The first control unit 200 is adapted to controlling the engine 230, the clutch 240 and the gearbox on the basis of at least one of signals S1, S2 and S3. It may for example be adapted to controlling the sliding together of the clutch on the basis of signals S1 and S2. It may for example be adapted to controlling the disengagement and engagement and connection of the gearbox on the basis of signals S2 and S3, or on the basis of S1 and S3 when the clutch is in an engaged state.

A feedback means 270 may be provided in a cab of the vehicle 100. The first control unit 200 is arranged for communication with said feedback means via a link L271. Said feedback means may be adapted to indicating for a driver that a gear change cannot take place upon demand, e.g. because fuel cannot be dosed to the engine 230.

Said feedback means 270 may be any suitable feedback means, comprising for example a VDU. It may also be called an indicating device, in which case it may be arranged to indicate relevant information for a driver by visual, auditory or tactile feedback. It may comprise a lamp which can indicate for a driver by means of light visible to the eye that a gear change cannot take place upon demand. It may comprise a loudspeaker which can indicate for a driver by sound audible to the human ear that a gear change cannot take place upon demand.

The first control unit 200 is adapted in one version to interrupting torque transmission between said engine 230 and said gearbox 250 by means of said clutch 240 upon demand for gear ratio change in said gearbox. It is adapted in one version to choosing an engine speed set-point value n_ref. It is adapted in one version to determining whether said engine response to a demand for it to be directed towards said engine speed set-point value n_ref. It is adapted in one version to changing gear ratio if said engine responds to said demand. It is adapted in one version, if said engine does not respond to said demand, to refraining from changing gear ratio and to activating torque transmission between said engine and said gearbox by means of said clutch. It is adapted in one version to indicating that the engine does not respond to said demand, in which case gear ratio change is inappropriate. It is adapted in one version, if the engine does not respond to said demand, to changing an operating mode for control of the vehicle. It is adapted in one version to determining an engine speed required for changing gear and to directing the engine to said required speed. It is adapted in one version to activating torque transmission between the engine and the gearbox by means of the clutch. It is adapted in one version to determining whether dragging of said engine prevails.

A second control unit 210 is arranged for communication with the first control unit 200 via a link L211. It may be releasably connected to the first control unit. It may be a control unit external to the vehicle 100. It may be adapted to performing the innovative method steps according to the invention. It may be used to cross-load software to the first control unit, particularly software for applying the innovative method. It may alternatively be arranged for communication with the first control unit via an internal network on board the vehicle. It may be adapted to performing functions corresponding to those of the first control unit, e.g. determining whether said engine 230 responds to said demand for said engine to be directed towards a chosen engine speed set-point value n_ref and to changing gear ratio if said engine responds to said demand.

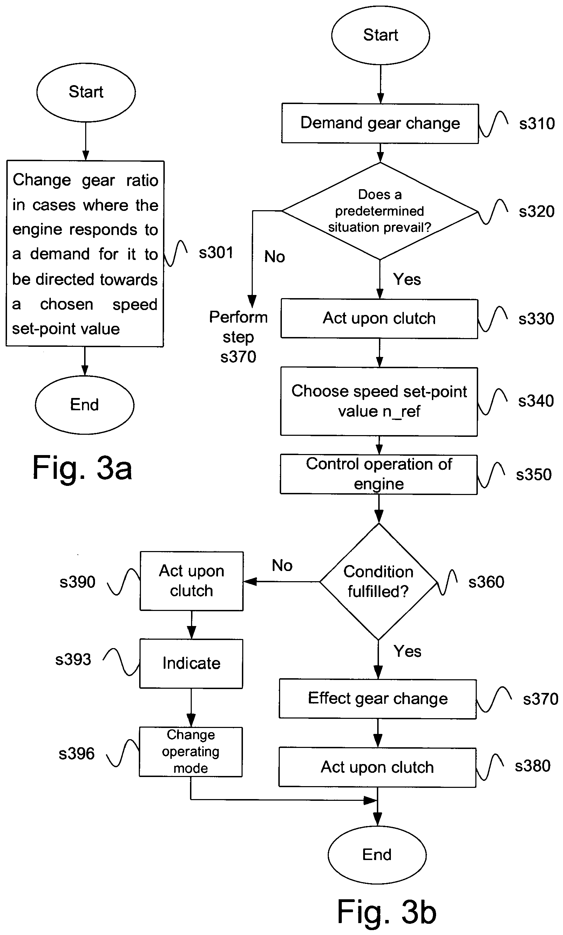

Figure 3a is a schematic flowchart of a method pertaining to changing gear in a power train of a motor vehicle provided with an engine, a clutch device and a gearbox without synchronising rings, according to an embodiment of the invention. The method comprises a first step s301 comprising the steps of
- demanding gear ratio change in said gearbox,
- interrupting torque transmission between said engine and said gearbox by means of said clutch device,
- choosing an engine speed set-point value,
- determining whether said engine response to a demand for said engine to be directed towards said speed set-point value, and
- changing gear ratio if said engine responds to said demand. The method ends after step s301.

Figure 3b is a schematic flowchart of a method pertaining to changing gear in a power train of a motor vehicle provided with an engine, a clutch device and a gearbox without synchronising rings, according to an embodiment of the invention.

The method comprises a first step s310 comprising the step of demanding gear ratio change in the gearbox 250.

Method step s310 is followed by a step s320.

Method step s320 comprises the step of determining whether a predetermined situation prevails. Said predetermined situation may be a situation in which the engine 230 drags, e.g. travels downhill with engine braking. This may be achieved in various ways. In one example it may be determined that dragging prevails by taking account of a prevailing speed n1 of the shaft 235 and a prevailing speed of the shaft 255. In one example it may be determined that dragging prevails by taking into account the torque provided by the engine. If said predetermined situation prevails, i.e. yes, a subsequent step s330 is performed. If said predetermined situation does not prevail, i.e. no, a subsequent s370 is performed.

Method step s330 comprises the step of interrupting torque transmission between the engine 230 and the gearbox 250 by means of the clutch 240, thereby deactivating torque transmission between the engine and the gearbox. Step s330 is followed by a step s340.

Method step s340 comprises the step of choosing an engine speed set-point value n_ref which may correspond to any suitable engine speed. In one example said engine speed set-point value n_ref chosen may be a prevailing speed n3 of the shaft 255. In one example said engine speed set-point value n_ref chosen may be a prevailing speed n1 of the shaft 235. In one example said engine speed set-point value n_ref chosen may be a prevailing speed n1 of the shaft 235 plus a predetermined value n_add which may for example be 50 or 100 rpm. In one example n_ref=n1+n_add is thus chosen. Step s340 is followed by a step s350.

Method step s350 comprises the step of directing a speed of the engine 230 towards said engine speed set-point value. Step s350 is followed by a step s360.

Method step s360 comprises the step of determining whether a predetermined condition is fulfilled or not. In one example said condition may comprise a prevailing speed of the engine 230 being increased towards said chosen engine speed set-point value n_ref over a predetermined period of time. In one example said condition may comprise a prevailing speed of the engine being increased towards said chosen engine speed set-point value n_ref by at least a minimum value, e.g. 50 or 100 rpm. In one example said condition may comprise a speed of the engine reaching said chosen engine speed set-point value n_ref. In one example said condition may comprise a speed of the engine reaching said chosen engine speed set-point value n_ref over a predetermined period of time, e.g. 0.5 second.

At this point it may be determined whether the engine 230 response to a demand for it to be directed towards said engine speed set-point value n_ref. At this point it may be assumed that the engine can at a later stage be directed towards a speed required for effecting gear changes.

If said condition is fulfilled, i.e. yes, a subsequent step s370 is performed. If said condition is not fulfilled, i.e. no, a subsequent step s390 is performed.

Method step s370 comprises the step of changing gear ratio in cases where the engine 230 responds to said demand. This may be effected automatically by means of the first control unit 200, in which case the gearbox is caused to change gear step corresponding to said gear change demanded according to step s310. Step s370 is followed by a step s380.

Method step s380 comprises the step of activating torque transmission between the engine 230 and the gearbox 250 by means of the clutch 240, in which case the clutch may be slid together to close the vehicle's power train. The method ends after step s380.

Method step s390 comprises the step of activating torque transmission between the engine and the gearbox by means of the clutch and thereupon refraining from changing gear ratio upon demand if said engine does not respond to said demand, in which case the clutch may be slid together in order to close the vehicle's power train. Step s390 is followed by a step s393.

Method step s393 comprises the step of indicating that the engine 230 does not respond to said demand, in which case gear ratio change is inappropriate. This may in one alternative be by generating a fault code in the first control unit 200. It may in an alternative version be by using the viewing device 270 to indicate for a driver visually that a gear change cannot take place. Method step s393 is followed by a step s396.

Method step s396 comprises the step of changing operating mode for control of the vehicle, in which case a prevailing operating mode may be changed to a so-called "limp home" mode, whereby running routines for torque limitation of the engine may for example be activated. The method ends after step s396.

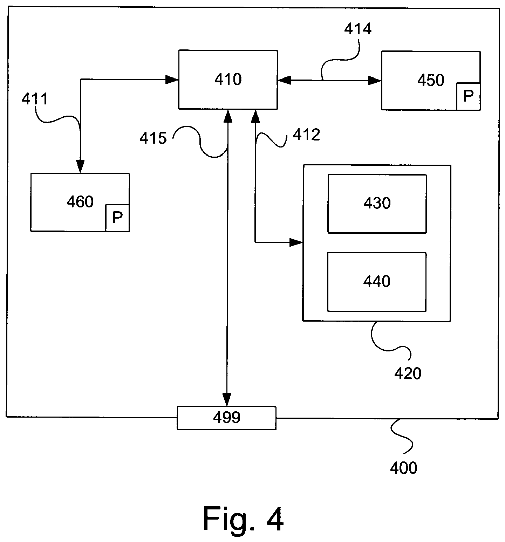

Figure 4 is a diagram of one version of a device 400. The control units 200 and 210 described with reference to Figure 2 may in one version comprise the device 400, which comprises a non-volatile memory 420, a data processing unit 410 and a read/write memory 450. The non-volatile memory has a first memory element 430 in which a computer programme, e.g. an operating system, is stored for controlling the function of the device 400. The device 400 further comprises a bus controller, a serial communication port, I/O means, an A/D converter, a time and date input and transfer unit, an event counter and an interruption controller (not depicted). The non-volatile memory has also a second memory element 440.

A proposed computer programme P comprises routines for interrupting torque transmission between said engine 230 and said gearbox 250 by means of said clutch 240 upon demand for gear ratio change in said gearbox. This programme comprises routines for choosing an engine speed set-point value n_ref. It comprises routines for determining whether said engine response to a demand for it to be directed towards said engine speed set-point value n_ref. It comprises routines for changing gear ratio if said engine responds to said demand. It comprises routines for activating torque transmission between the engine and the gearbox by means of the clutch and, if said engine does not respond to said demand, for refraining from gear ratio change. It comprises routines for indicating that the engine does not respond to said demand, in which case gear ratio change is inappropriate. It comprises routines, if the engine does not respond to said demand, for changing an operating mode for control of the vehicle. It comprises routines for determining an engine speed required for changing gear and to directing the engine to said required speed. It comprises routines for activating torque transmission between the engine and the gearbox by means of the clutch. It comprises routines for determining whether dragging of said engine prevails.

The programme P may be stored in an executable form or in compressed form in a memory 460 and/or in a read/write memory 450.

Where the data processing unit 410 is described as performing a certain function, it means that the data processing unit conducts a certain part of the programme stored in the memory 460, or a certain part of the programme stored in the read/write memory 450.

The data processing device 410 can communicate with a data port 499 via a data bus 415. The non-volatile memory 420 is intended for communication with the data processing unit 410 via a data bus 412. The separate memory 460 is intended to communicate with the data processing unit 410 via a data bus 411. The read/write memory 450 is adapted to communicating with the data processing unit via a data bus 414. The data port 499 may for example have the links L211, L231, L233, L241, L243, L251, L253 and L271 connected to it (see Figure 2).

When data are received on the data port 499, they are temporarily stored in the second memory element 440. When input data have been stored temporarily, the data processing unit 410 is prepared to effect code execution as described above. In one version, signals received on the data port 499 contain information about a prevailing engine speed n1, n2 and n3 as described above.

Parts of the methods herein described may be conducted by the device 400 by means of the data processing unit 410 which runs the programme stored in the memory 460 or the read/write memory 450. When the device 400 runs the programme, methods herein described are executed.

The foregoing description of the preferred embodiments of the present invention is provided for illustrative and descriptive purposes. It is not intended to be exhaustive nor to restrict the invention to the variants described. Many modifications and variations will obviously suggest themselves to one skilled in the art. The embodiments have been chosen and described in order best to explain the principles of the invention and their practical applications and hence make it possible for one skilled in the art to understand the invention for different embodiments and with the various modifications appropriate to the intended use.

## Claims

1. A method for changing gear in a power train of a motor vehicle (100; 110) provided with an engine (230), a clutch device (240) and a gearbox (250) without synchronising rings, comprising the step of
- demanding (s310) gear ratio change in said gearbox (250),
**characterised by** the steps of
- determining whether dragging of said engine (230) prevails and, if so,
- interrupting torque transmission (s330) between said engine (230) and said gearbox (250) by means of said clutch device (240),
- choosing (s340) an engine speed set-point value (n_ref),
- determining (s360) whether said engine (230) responds to a demand for said engine (230) to be directed towards said speed set-point value (n_ref), and
- changing gear ratio (s370) if said engine (230) responds to said demand,
- refraining from changing gear ratio if said engine (230) does not respond to said demand,
- activating torque transmission (s390) between said engine (230) and said gearbox (250) by means of said clutch (240).

2. A method according to claim 1, further comprising the step of
- indicating (s393) that said engine (230) does not respond to said demand.

3. A method according to claim 1 or 2, further comprising the step of
- changing an operating mode (s396) for control of the vehicle if the engine (230) does not respond to said demand.

4. A method according to claim 1, in which the step of changing gear ratio comprises the steps of
- determining a speed (n3) of said engine (230) which is required for changing gear,
- directing said engine (230) to said required speed (n3).

5. A device for changing gear in a power train of a motor vehicle (100; 110) provided with an engine (230), a clutch device (240) and a gearbox (250) without synchronising rings, comprising
- means (200; 210; 400) for demanding gear ratio change in said gearbox (250),
**characterised by**
- means (200; 210; 400) for determining whether dragging of said engine (230) prevails,
- means (200; 210; 400) for interrupting torque transmission between said engine (230) and said gearbox (250) by means of said clutch device (240),
- means (200; 210; 400) for choosing an engine speed set-point value (n_ref),
- means (200; 210; 400; 232) for determining whether said engine (230) responds to a demand for said engine (230) to be directed towards said speed set-point value (n_ref), and
- means (200; 210; 400) for changing gear ratio if said engine (230) responds to said demand,
- means (200; 210; 400) for refraining from changing gear ratio if said engine (230) does not respond to said demand,
- means (200; 210; 400) for activating torque transmission between said engine (230) and said gearbox (250) by means of said clutch (240).

6. A device according to claim 5, further comprising
- means (200; 210; 400) for indicating that said engine (230) does not respond to said demand.

7. A device according to claim 5 or 6, further comprising
- means (200; 210; 400) for changing an operating mode for control of the vehicle if the engine (230) does not respond to said demand.

8. A device according to claim 5, further comprising
- means (200; 210; 400; 252) for determining a speed (n3) of said engine (230) which is required for changing gear,
- means (200; 210; 400) for directing said engine (230) to said required speed (n3).

9. A motor vehicle (100; 110) provided with a device according to any one of claims 5-8.

10. A motor vehicle (100; 110) according to claim 9, which vehicle is any from among truck, bus or car.

11. A computer programme (P) for changing gear in a power train of a motor vehicle (100; 110) provided with an engine (230), clutch device (240) and gearbox (250) without synchronising rings, which programme (P) comprises programme code for causing an electronic control unit (200; 400) or another computer (210; 400) connected to the electronic control unit (200; 400) to perform steps according to any one of claims 1-4.

12. A computer programme product comprising a programme code stored on a computer-readable medium for performing method steps according to any one of claims 1-4 when said computer programme is run on an electronic control unit (200; 400) or another computer (210; 400) connected to the electronic control unit (200; 400).

## Patentansprüche

1. Verfahren zum Wechseln eines Gangs in einem Antriebsstrang eines Kraftfahrzeugs (100; 110), umfassend einen Motor (230), eine Kupplungsvorrichtung (240) und ein Getriebe (250) ohne Synchronisierungsringe, umfassend die Schritte
- Anfordern (s310) eines Getriebestufenwechsels in dem Getriebe (250), **gekennzeichnet durch** die Schritte
- Bestimmen, ob ein Schleppen des Motors (230) vorliegt und, wenn dies vorliegt,
- Unterbrechen der Drehmomentübertragung (s330) zwischen dem Motor (230) und dem Getriebe (250) durch die Kupplungsvorrichtung (42),
- Wählen (s340) eines Motordrehzahlsollwerts (n_ref),
- Bestimmen (s360), ob der Motor (230) auf eine Anfrage an den Motor (230) reagiert, auf den Motordrehzahlsollwert (n_ref) gebracht zu werden, und
- Wechseln der Getriebestufe (s370), wenn der Motor (230) auf diese Anfrage reagiert,
- Unterlassen des Getriebestufenwechsels, wenn der Motor (230) nicht auf diese Anfrage reagiert,
- Aktivieren einer Drehmomentübertragung (s390) zwischen dem Motor (230) und dem Getriebe (250) durch die Kupplung (240).

2. Verfahren nach Anspruch 1, ferner umfassend den Schritt
- Anzeigen (s393), dass der Motor (230) nicht auf die Anfrage antwortet.

3. Verfahren nach Anspruch 1 oder 2, ferner umfassend den Schritt
- Wechseln eines Betriebsmodus (s396) zum Steuern des Fahrzeugs, wenn der Motor (230) nicht auf die Anfrage reagiert.

4. Verfahren nach Anspruch 1, wobei der Schritt des Getriebestufenwechsels die Schritte umfasst
- Bestimmen einer Drehzahl (n3) des Motors (230), die für den Gangwechsel benötigt wird,
- Bringen des Motors (230) auf die benötigte Drehzahl (n3).

5. Vorrichtung zum Wechseln eines Gangs in einem Antriebsstrang eines Kraftfahrzeugs (100; 110), umfassend einen Motor (230), eine Kupplungsvorrichtung (240) und ein Getriebe (250) ohne Synchronisierungsringe, umfassend
- Mittel (200; 210; 400) zum Anfordern eines Getriebestufenwechsels in dem Getriebe (250),
**gekennzeichnet durch**
- Mittel (200; 210; 400) zum Bestimmen, ob ein Schleppen des Motors (230) vorliegt,
- Mittel (200; 210; 400) zum Unterbrechen der Drehmomentübertragung zwischen dem Motor (230) und dem Getriebe (250) durch die Kupplungsvorrichtung (240),
- Mittel (200; 210; 400) zum Wählen eines Motordrehzahlsollwert (n_ref),
- Mittel (200; 210; 400; 232) zum Bestimmen, ob der Motor (230) auf eine Anfrage an den Motor (230) reagiert, auf den Motordrehzahlsollwert (n_ref) gebracht zu werden, und
- Mittel (200; 210; 400) zum Wechseln der Getriebestufe, wenn der Motor (230) auf diese Anfrage reagiert,
- Mittel (200; 210; 400) zum Unterlassen des Getriebestufenwechsels, wenn der Motor (230) nicht auf diese Anfrage reagiert,
- Mittel (200; 210; 400) zum Aktivieren einer Drehmomentübertragung zwischen dem Motor (230) und dem Getriebe (250) durch die Kupplung (240).

6. Vorrichtung nach Anspruch 5, ferner umfassend
- Mittel (200; 210; 400) zum Anzeigen, dass der Motor (230) nicht auf die Anfrage antwortet.

7. Vorrichtung nach Anspruch 5 oder 6, ferner umfassend
- Mittel (200; 210; 400) zum Wechseln eines Betriebsmodus zum Steuern des Fahrzeugs, wenn der Motor (230) nicht auf die Anfrage reagiert.

8. Vorrichtung nach Anspruch 5, ferner umfassend
- Mittel (200; 210; 400; 252) zum Bestimmen einer Drehzahl (n3) des Motors (230), die für den Gangwechsel benötigt wird,
- Mittel (200; 210; 400) zum Bringen des Motors (230) auf die benötigte Drehzahl (n3).

9. Kraftfahrzeug (100; 110), umfassend eine Vorrichtung nach einem der Ansprüche 5-8.

10. Kraftfahrzeug (100; 110) nach Anspruch 9, wobei das Fahrzeug ein Truck, ein Bus oder ein Auto ist.

11. Computerprogramm (P) zum Wechseln eines Gangs in einem Antriebsstrang eines Kraftfahrzeugs (100; 110), umfassend einen Motor (230), eine Kupplungsvorrichtung (240) und ein Getriebe (250) ohne Synchronisierungsringe, wobei das Programm (P) Programmcode umfasst, um eine elektronische Steuereinheit (200; 400) oder einen anderen Computer (210; 400), der mit der elektronischen Steuereinheit (200; 400) verbunden ist, dazu zu veranlassen, Schritte nach einem der Ansprüche 1-4 durchzuführen.

12. Computerprogrammprodukt, umfassend einen Programmcode, der auf einem computerlesbaren Medium gespeichert ist, zum Durchführen von Verfahrensschritten nach einem der Ansprüche 1-4, wenn das Computerprogramm auf einer elektronischen Steuereinheit (200; 400) oder einem anderen Computer (210; 400) ausgeführt wird, der mit der elektronischen Steuereinheit (200; 400) verbunden ist.

## Revendications

1. Procédé pour le changement de vitesse dans un groupe motopropulseur d'un véhicule à moteur (100 ; 110) pourvu d'un moteur (230), d'un dispositif d'embrayage (240) et d'une boîte de vitesses (250) sans bagues de synchronisation, comprenant les étapes consistant en
- la demande (s310) d'un changement de rapport de vitesse dans ladite boîte de vitesses (250),
**caractérisé par** les étapes consistant en
- la détermination du fait que la traînée dudit moteur (230) domine ou non et, si oui,
- l'interruption de transmission de couple (s330) entre ledit moteur (230) et ladite boîte de vitesses (250) au moyen dudit dispositif d'embrayage (240),
- la sélection (s340) d'une valeur de consigne de régime de moteur (n_ref),
- la détermination (s360) du fait que ledit moteur (230) répond ou non à une demande de direction dudit moteur (230) vers ladite valeur de consigne de régime (n_ref), et
- le changement de rapport de vitesse (s370) si ledit moteur (230) répond à ladite demande,
- l'abstention de changement de rapport de vitesse si ledit moteur (230) ne répond pas à ladite demande,
- l'activation de transmission de couple (s390) entre ledit moteur (230) et ladite boîte de vitesses (250) au moyen dudit embrayage (240).

2. Procédé selon la revendication 1, comprenant en outre l'étape consistant en
- l'indication (s393) du fait que ledit moteur (230) ne répond pas à ladite demande.

3. Procédé selon la revendication 1 ou 2, comprenant en outre l'étape consistant en
- le changement d'un mode opérationnel (s396) pour la commande du véhicule si le moteur (230) ne répond pas à ladite demande.

4. Procédé selon la revendication 1, dans lequel l'étape de changement de rapport de vitesse comprend les étapes consistant en
- la détermination d'un régime (n3) dudit moteur (230) qui est requis pour le changement de vitesse,
- la direction dudit moteur (230) vers ledit régime (n3) .

5. Dispositif pour le changement de vitesse dans un groupe motopropulseur d'un véhicule à moteur (100 ; 110) pourvu d'un moteur (230), d'un dispositif d'embrayage (240) et d'une boîte de vitesses (250) sans bagues de synchronisation, comprenant
- des moyens (200 ; 210 ; 400) pour la demande de changement de rapport de vitesse dans ladite boîte de vitesses (250),
**caractérisé par**
- des moyens (200 ; 210 ; 400) pour la détermination du fait que la traînée dudit moteur (230) domine ou non,
- des moyens (200 ; 210 ; 400) pour l'interruption de transmission de couple entre ledit moteur (230) et ladite boîte de vitesses (250) au moyen dudit dispositif d'embrayage (240),
- des moyens (200 ; 210 ; 400) pour la sélection d'une valeur de consigne de régime de moteur (n_ref),
- des moyens (200 ; 210 ; 400 ; 232) pour la détermination du fait que ledit moteur (230) répond ou non à une demande de direction dudit moteur (230) vers ladite valeur de consigne de régime (n_ref), et
- des moyens (200 ; 210 ; 400) pour le changement de rapport de vitesse si ledit moteur (230) répond à ladite demande,
- des moyens (200 ; 210 ; 400) pour l'abstention de changement de rapport de vitesse si ledit moteur (230) ne répond pas à ladite demande,
- des moyens (200 ; 210 ; 400) pour l'activation de transmission de couple entre ledit moteur (230) et ladite boîte de vitesses (250) au moyen dudit embrayage (240).

6. Dispositif selon la revendication 5, comprenant en outre
- des moyens (200 ; 210 ; 400) pour l'indication du fait que ledit moteur (230) ne répond pas à ladite demande.

7. Dispositif selon la revendication 5 ou 6, comprenant en outre
- des moyens (200 ; 210 ; 400) pour le changement d'un mode opérationnel pour la commande du véhicule si le moteur (230) ne répond pas à ladite demande.

8. Dispositif selon la revendication 5, comprenant en outre
- des moyens (200 ; 210 ; 400 ; 252) pour la détermination d'un régime (n3) dudit moteur (230) qui est requis pour le changement de vitesse,
- des moyens (200 ; 210 ; 400) pour la direction dudit moteur (230) vers ledit régime requis (n3).

9. Véhicule à moteur (100 ; 110) pourvu d'un dispositif selon l'une quelconque des revendications 5 à 8.

10. Véhicule à moteur (100 ; 110) selon la revendication 9, lequel véhicule est l'un quelconque d'un camion, d'un bus ou d'une voiture.

11. Programme informatique (P) pour le changement de vitesse dans un groupe motopropulseur d'un véhicule à moteur (100 ; 110) pourvu d'un moteur (230), d'un dispositif d'embrayage (240) et d'une boîte de vitesses (250) sans bagues de synchronisation, lequel programme (P) comprend un code de programme pour amener une unité de commande électronique (200 ; 400) ou un autre ordinateur (210 ; 400) connecté à l'unité de commande électronique (200 ; 400) à exécuter des étapes selon l'une quelconque des revendications 1 à 4.

12. Produit de programme informatique comprenant un code de programme stocké sur un support lisible par ordinateur pour l'exécution d'étapes de procédé selon l'une quelconque des revendications 1 à 4 lorsque ledit programme informatique est exécuté sur une unité de commande électronique (200 ; 400) ou un autre ordinateur (210 ; 400) connecté à l'unité de commande électronique (200 ; 400).
